# EUROPÄISCHE PATENTSCHRIFT

(11) **EP 1 049 930 B1**
(45) Veröffentlichungstag und Bekanntmachung des Hinweises auf die Patenterteilung: **14.02.2007**
(21) Anmeldenummer: 99907431.3
(22) Anmeldetag: 27.01.1999
(51) Int. Cl.: G01N 31/22, G01K 3/04, B65D 79/02, C09K 9/02, G01K 11/16

(54) **SUBSTRAT ZUM VERPACKEN VON ODER ANBRINGEN AN VERDERBLICHEN PRODUKTEN UND VERFAHREN ZU DEREN QUALITÄTSBESTIMMUNG**
SUBSTRATE FOR PACKAGING PERISHABLE GOODS OR FOR APPLICATION ONTO SAME AND METHOD FOR DETERMINING THE QUALITY OF SAID GOODS
SUBSTRAT POUR EMBALLER DES PRODUITS PERISSABLES OU DESTINE A ETRE APPLIQUE SUR LESDITS PRODUITS, ET PROCEDE POUR DETERMINER LA QUALITE DESDITS PRODUITS

(30) Priorität: 28.01.1998 DE 19803208
(43) Veröffentlichungstag der Anmeldung: 08.11.2000
(73) Patentinhaber: Haarer, Dietrich, 95448 Bayreuth (DE); Eichen, Yoav, 32000 Haifa (IL)
(72) Erfinder: Haarer, Dietrich, 95448 Bayreuth (DE); Eichen, Yoav, 32000 Haifa (IL)
(74) Vertreter: Szele, Ivanka
(86) Internationale Anmeldenummer: PCT/EP1999/000517
(87) Internationale Veröffentlichungsnummer: WO 1999/039197

(56) Entgegenhaltungen:
- EP-A- 0 117 390
- EP-A- 0 177 432
- WO-A-92/09870
- WO-A-96/06643
- US-A- 4 389 217
- US-A- 5 053 339
- US-A- 5 057 434

## Beschreibung

Die Erfindung betrifft ein Substrat zum Verpacken von oder Anbringen an verderblichen, alterungs- oder temperaturempfindliche Produkte wie Lebensmittel oder Medikamente sowie ein Verfahren zu deren Qualitätsbestimmung.

Bei der Verwendung vergänglicher Materialien ist es häufig wünschenswert, das Alter und den aktuellen Gebrauchszustand der Materialien zu ermitteln. Wurde früher das Anbringen eines Verfallsdatums an der Verpackung für ausreichend erachtet, ist dieses Vorgehen heute für eine Vielzahl von Produkten zu ungenau und zu wenig fälschungssicher. Insbesondere ist der Zustand vergänglicher Produkte in der Regel nicht nur eine Funktion der Zeit, sondern auch von weiteren Größen wie insbesondere der Temperatur.

Die US 3,999,946 greift diese Problematik auf und schlägt vor, einen die Zeit-Temperatur-Vorgeschichte aufzeichnenden Indikator an den verderblichen Produkten anzubringen. Der ursprünglich farblose Indikator auf Acetylenbasis zeigt je nach Lagerdauer und Lagertemperatur des Produktes eine charakteristische, irreversible Verfärbung, anhand derer auf die Qualität des gelagerten verderblichen Produkts geschlossen werden kann.

Einer weiten Verbreitung des aus der US 3,999,946 bekannten Verfahrens steht jedoch dessen umständliche Handhabung im Wege. So muß der Indikator bis zum Anbringen am Produkt bei sehr tiefen Temperaturen und im Dunkeln gelagert werden, um das mit der Indikatorsynthese initiierte Einsetzen des eigentlich gewünschten Zeit-Temperatur-Effekts zunächst zu verzögern. Die Indikatorreaktion selbst läuft auto-katalytisch und stark nicht-linear ab, was eine genaue Auswertung erschwert. Nachteilig ist weiterhin, daß die Indikatorreaktion irreversibel ist, so daß eine Verwendung bei den zunehmend Verbreitung findenden Mehrwegverpackungen ausscheidet.

Die WO 96/06643 offenbart die Verwendung von photochromen, chemochromen und piezochromen Farbstoffen, die in eine Polymermatrix eingebettet sind, zum Nachweis der Bestrahlung von verpackten Materialien wie zum Beispiel Nahrungsmitteln oder medizinischen Zusammensetzungen.

Ausgehend von diesen und weiteren Nachteilen des Standes der Technik liegt der Erfindung die Aufgabe zugrunde, ein Substrat zum Verpacken von oder Anbringen an verderbliche Produkte anzugeben, das eine Qualitätsbestimmung der Produkte erlaubt, einfach handhabbar und darüberhinaus auch mehrfach verwendbar ist. Aufgabe ist weiterhin, ein Verfahren zur Qualitätsbestimmung zu schaffen, welches eine sichere und genaue Ermittlung des Gebrauchszustandes des verderblichen Produktes erlaubt.

Diese Aufgabe wird durch ein Substrat gemäß Anspruch 1 und in verfahrenstechnischer Hinsicht durch Anspruch 20 gelöst. Die Unteransprüche betreffen bevorzugte Ausgestaltungen und Weiterbildungen der Erfindung.

Ein Substrat zum Verpacken von oder zum Anbringen an alterungs- und temperaturempfindlichen Produkten mit einem im oder auf dem oder unter dem Substrat angeordneten planaren Zeit-Temperatur-Integrator, gestattet eine zuverlässige Qualitätsbestimmung verderblicher Produkte, wenn der Zeit-Temperatur-Integrator mindestens einen reversiblen kristallinen Indikator enthält, der in eine Matrix eingebettet ist und photochrome Eigenschaften auf der Basis von Transferreaktionen aufweist. Unter Transferreaktion sind allgemein solche Reaktionen zu verstehen, die bei der Änderung der atomaren Kennektivitäten erfolgt, die die Umlagerung mindestens eines Atoms involviert. Beispielhaft ist der Transfer eines Wasserstoffatomes (bzw. eines Protons oder Hydrids). Hier wird die oben genannte Spezies von einer "Donator"-Gruppe auf eine "Akzeptor"-Gruppe transferiert und bildet dabei eine tautomere Verbindung. Beim Transfer anderer Gruppen können sich bei der Transfer-Reaktion isomere bzw. geladene Spezies bilden.

Aufgrund der photochromen Eigenschaften läßt sich der Indikator photo-induziert durch Bestrahlung mit Photonen eines bestimmten Energiebereiches färben, wobei im Anschluß an die Färbung eine zeit- und temperaturabhängige Entfärbung eintritt. Die geforderte Reversibilität der Indikatorreaktion gestattet nach oder während der Entfärbung eine erneute photo-induzierte Färbung. Die Färbung des Indikators kann zu einem definierten Zeitpunkt, bevorzugt z.B. unmittelbar vor oder nach der Produktion oder der Verpackung des verderblichen Materials erfolgen.

Im Gegensatz zu den Indikatormaterialien der Standes der Technik läßt sich die Zeit-Temperatur-Uhr somit zu einem gewünschten Zeitpunkt definiert starten und beginnt nicht bereits schon mit dem Zeitpunkt der Indikatorsynthese irreversibel zu laufen. Außerdem wird erfindungsgemäß nicht der Färbungsprozeß, sondern die Rückreaktion, d.h. die Entfärbung, betrachtet.

Der Zeit-Temperatur-Integrator kann mit einem Filter versehen sein, um durch Ausfiltern bestimmter Wellenlängenbereiche ein unerwünschtes erneutes Einfärben des kristallinen nach dem Starten der Zeit-Temperatur-Uhr zu vermeiden. Zusätzlich kann zur Fälschungssicherung ein weiterer, irreversibler Indikator z.B. neben oder über dem reversiblen Indikator angeordnet sein. Der weitere Indikator zeigt mit einer irreversiblen Verfärbung an, daß der reversible Indikator nach Produktion oder Verpackung des verderblichen Gutes erneut eingefärbt wurde.

Kristalline Indikatoren zeigen für übliche kommerzielle Anwendungen ausreichend lange Entfärbungszeiten von typischerweise einem Tag und mehr. Amorphe Indikatoren zeigen in der Regel Entfärbungszeiten von unter einem Tag. Durch Wahl der Synthesebedingungen bzw. Variation der Kristallwachstumsprozesse lassen sich die Entfärbungszeiten gezielt zwischen fast instantanem Ausbleichen bis hin zu Tagen, Wochen oder Monaten enstellen.

Es können können auch Indikatoren mit mehr als einer charakteristischen Zeitdomäne hergestellt werden. Derartige Indikatoren können z.B. einen Phasenübergang aufweisen, wobei die verschiedenen Phasen unterschiedliches Entfärbungsverhalten aufzeigen. Die gleichzeitige Verwendung von zwei oder mehreren Indikatoren mit unterschiedlichen Zeitdomänen ist ebenfalls möglich.

Die Indikatoren werden bevorzugt in eine Trägermatrix eingebettet. Der Matrixbegriff hat erfindungsgemäß eine sehr weite Bedeutung und umfaßt z.B. auch das Substrat. So ist es denkbar, die Indikatoren direkt in einen Bereich des Substrates einzulagern.

Der eigentlichen Qualitätsbestimmung von alterungs- oder temperaturempfindlichen Produkten geht zunächst die photo-induzierte Färbung des reversiblen kristallinen Indikators voraus. Die Färbung kann vor dem Aufbringen eines Filters bzw. des irreversiblen Indikators oder von einer dem Filter gegenüberliegenden Substratseite erfolgen. Zu einem späteren Zeitpunkt wird dann der Grad der zeit- bzw. temperaturbedingten Entfärbung gemessen und daraus auf die Produktqualität geschlossen. Bei einer Auswertung mit Hilfe des menschlichen Auges kann es vorteilhaft sein, wenn z.B. neben oder unter dem Substrat eine Referenzskala angeordnet ist, die einem bestimmten Entfärbungsgrad eine bestimmte Qualitätsstufe, einen bestimmten Zeitpunkt usw. zuordnet.

Weitere Einzelheiten und bevorzugte Ausgestaltungen der Erfindung ergeben sich aus den Figuren und Ausführungsbeispielen. Es zeigen:
- Fig. 1: Beispiele für reversible kristalline Indikatoren;
- Fig. 2: beispielhafte Proton-Transfer-Reaktionen;
- Fig. 3: eine beispielhafte Methylgruppen-Transfer-Reaktion;
- Fig. 4: eine beispielhafte Halogen-Transferreaktion;
- Fig. 5: ein Indikatorsystem mit zwei charakteristischen Zeitdomänen; und
- Fig. 6: einen Zeit-Temperatur-Integrator mit Referenzskala in Aufsicht.

Die erfindungsgemäßen Substrate eignen sich zum Verpacken von oder Anbringen an verderblichen Produkten wie Lebensmitteln (z.B. Gefriergut), Medikamenten, Drogen, Transplantationsorganen und vergänglichen Werkstoffen. Der mit dem Substrat in Verbindung stehende Zeit-Temperatur-Integrator kann flächig oder z.B. in Form eines Musters oder Logos ausgestaltet sein. Obwohl alle Komponenten wiederverwendbar sind, ist die Entsorgung grundsätzlich unbedenklich, da keine giftigen oder schädlichen Materialien zum Einsatz kommen müssen.

Die photochromen Indikatorreaktionen können z.B. auf reversiblem Elektronentransfer oder auf dem reversiblen Transfer eines geladenen oder ungeladenen Wasserstoffatoms (Proton, Hydrid) oder eines Wasserstoffisotops (Deuterium, Tritium) beruhen. Bevorzugt ist der Transfer von Protonen, Deuteronen, Halogenradikalionen oder einfachen chemischen Gruppen wie Methylgruppen.

Allgemein gilt, daß je nach der Art der photochemisch induzierten Transfer-Reaktion und insbesondere je nach Bindungsstärke des "Akzeptors" der transferierten Spezies verschieden lange Entfärbungszeiten erreicht werden können.

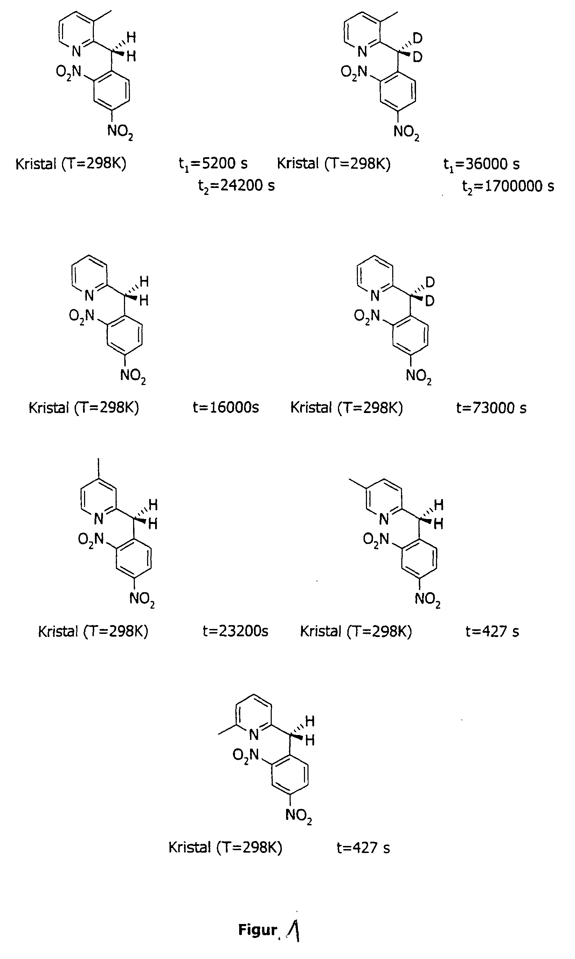

Fig. 1 zeigt Beispiele für Indikatoren mit den dazugehörigen typischen Entfärbungszeiten bei einer Temperatur von 298 K. Sofern, wo zwei Zeiten angegeben sind, handelt es sich um Systeme, die zwei verschiedene Phasen aufweisen.

Je nach Anwendungsfall kann eine Verbindung mit optimiertem Zeit-Temperatur-Verhalten verwendet werden.

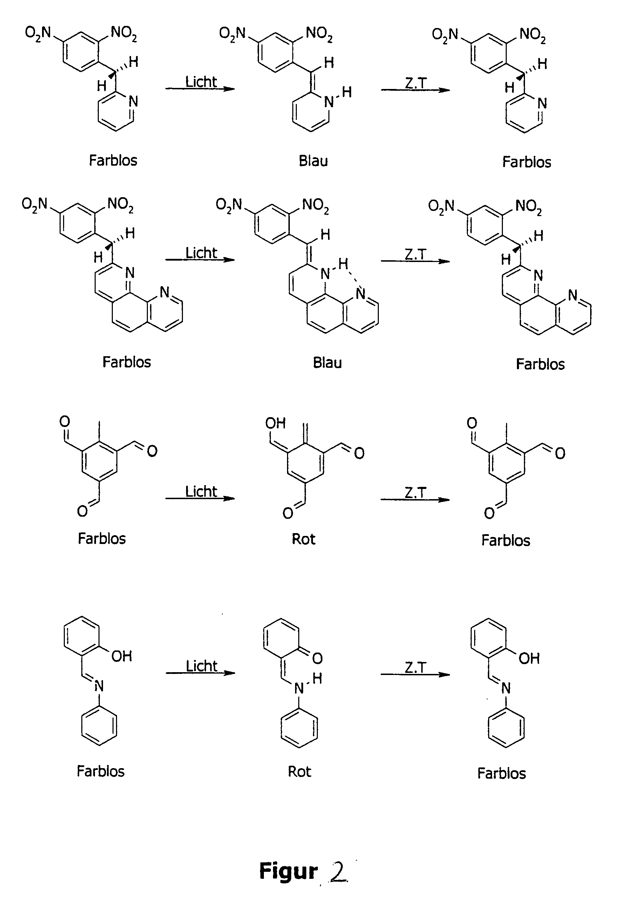

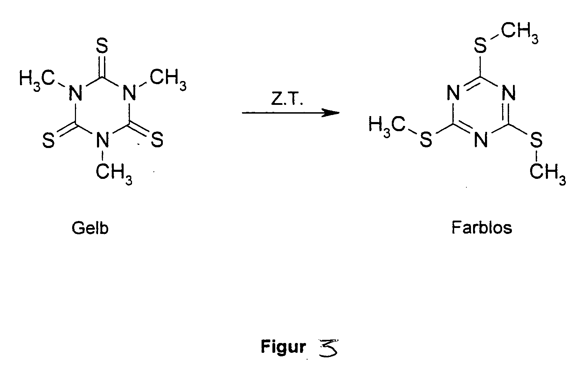

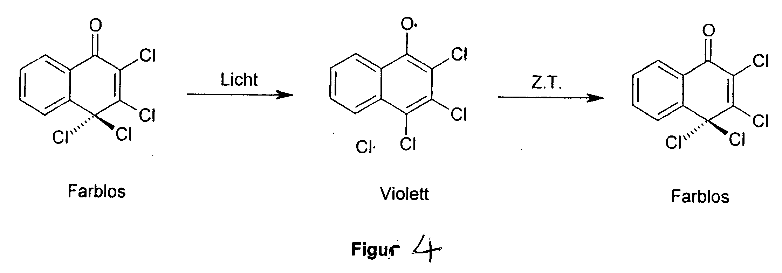

In Fig. 2 sind beispielhafte Proton-Transfer-Reaktionen skizziert. Dabei wird der zunächst farblose Indikator mit UV-Licht oder nahem UV-Licht bestrahlt, woraufhin ein Proton-Transfer und eine damit einhergehende Indikatorfärbung erfolgt. Dieser photoinduzierte Proton-Transfer läuft anschließend in Abhängigkeit von Zeit und Temperatur wieder in die andere Richtung, so daß sich der Indikator sukzessive entfärbt. Analoge Reaktionen, basierend auf dem Transfer von Methylgruppen oder Halogenradikalien, sind in den Fig. 3 und 4 dargestellt.

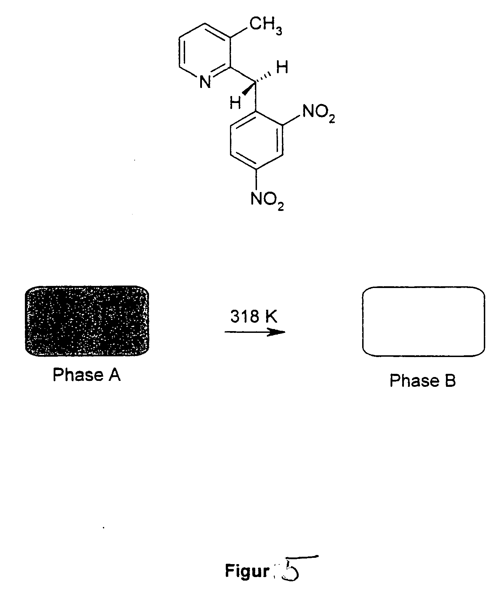

Fig. 5 zeigt ein System, welches zwei kristalline Phasen und zwei unterschiedliche charakteristische Zeitdomänen aufweist. Bei einer Temperatur von 318 K erfolgt ein Phasenübergang von einer ersten kristallinen Phase mit langen Entfärbezeiten zu einer zweiten kristallinen Phase mit einer um einen Faktor 10 kürzeren Entfärbezeit. Andere Phasenübergänge, beispielsweise Kristall-Schmelze, zeigen ähnliche Eigenschaften.

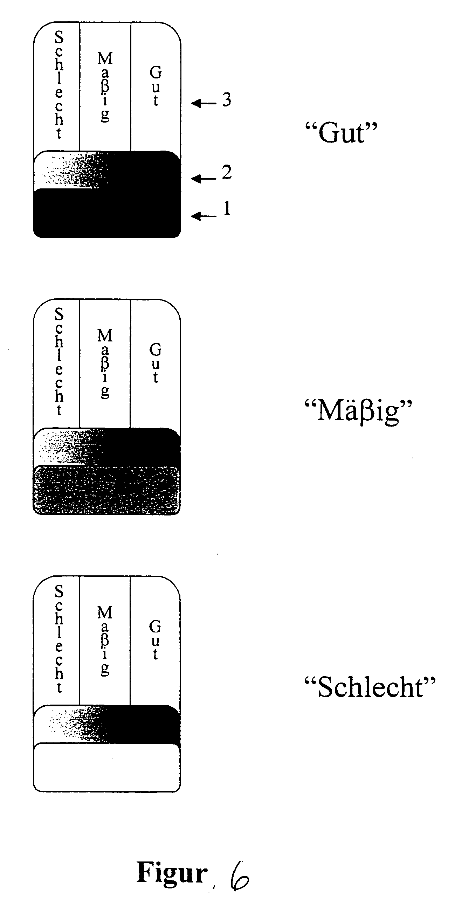

In Fig. 6 ist das Vorgehen zur Qualitätsbestimmung mit Hilfe eines Zeit-Temperatur-Integrators 1 dargestellt. Über dem Zeit-Temperatur-Integrator 1 ist eine aufgedruckte Referenzskala 2 angeordnet, welche mittels der ebenfalls aufgedruckten Zuordnungsskala 3 eine absolute Ermittlung von Qualitätsstufen erlaubt. Der Zeit-Temperatur-Integrator wird zweckmäßigerweise auf einem hellen Substrat angeordnet, um das Ablesen zu erleichtern.

Als Substratmaterialien eignen sich sowohl anorganische wie auch organische Materialien, bevorzugt solche, die aus konventionellen Schicht- und Verpakkungstechniken her bekannt sind. Beispielhaft genannt seien Polymere, Glas, Metalle, Papier, Karton usw. Das Substrat kann gleichzeitig das Verpackungsmaterial für die verderblichen Produkte bilden oder aber am Verpackungsmaterial oder direkt am Produkt befestigt werden.

Der reversible Indikator wird entweder direkt in das Substratmaterial eingebracht, wobei das Substrat die Matrixfunktion übernimmt und in Form einer indikatordotierten Matrix bevorzugt auf oder unter dem Substrat angeordnet. Der reversible Indikator kann in Form kleiner Kristallite oder in fester Lösung in die Matrix eingebettet sein. Bei der Matrix handelt es sich z.B. um einen polymeren (PVC, PMMA, PEO, etc.) oder glasartigen Film. Indikatordotierte Matrizen lassen sich auch mittels Sol-Gel-Tecniken herstellen.

Der als Fälschungssicherung gedachte irreversibel photoempfindliche Indikator kann als Überzug auf den Zeit-Temperatur-Integrator aufgebracht werden. Als geeignete irreversible Indikatoren kommen z.B. Pyrrol-Derivate wie 2-phenyl-di(2-pyrrol)methan in Frage. Dieses Material wird irreversibel rot, wenn es UV-Licht ausgesetzt wird.

Nach dem Aufbringen des irreversiblen Indikators wird auf dem Zeit-Temperatur-Integrator ein Farbfilter angeordnet. Für UV-empfindliche Indikatoren kommen Gelbfilter in Frage, die nur für Licht mit typischen Wellenlängen von über 430 nm durchlässig sind.

Das photoinduzierte Aufladen des Zeit-Temperatur-Integrators erfolgt bevorzugt vor dem Aufbringen des irreversiblen Indikators und des Filters. Alternativ kann auch daran gedacht werden, den Zeit-Temperatur-Integrator von einer nicht mit einem Filter bedeckten Substratseite aufzuladen.

Nachfolgend werden einige Herstellungsbeispiele für Zeit-Temperatur-Integratoren ausführlicher erläutert:

### Polymerfilme dotiert mit 2-(2,4-dinitrobenzyl) pyridin:

100 mg 2-(2,4-dinitrobenzyl)pyridin, α-DNBP, werden in 50 ml Tetrahydrofuran gelöst (Lösung A). 330 mg PVC (z.B. Molekulargewicht 100 000) werden in 50 ml Tetrahydrofuran gelöst und gefiltert (Lösung B). Lösung A und Lösung B werden in einem geeigneten Behälter gemischt, die Substanz in einen dünnen Film gegossen und dieser bei etwa 40 °C in Dunkelheit getrocknet. Der sich bildende Film ist etwa 100 µm dick, transparent und er zeigt exzellente mechanische und optische Eigenschaften. Die Filme können in verschiedenen Formen und Dicken erzeugt werden. Der transparente dotierte Film wird beim Aktivieren (z.B. UV-Strahlung) farbig und entfärbt sich mit einer Rate, die, abhängig von der Zeit und Temperatur, charakteristisch für das jeweilige gewählte Material ist. Das System ist über viele Zyklen reversibel.

### Reine organische Gläser von 2-(2,4-dinitrobenzyl) pyridin-Verbindungen:

3 mg eines glasformenden Materials wie z.B. Derivate des 2-(2,4-dinitrobenzyl) pyridin (z.B. als hetero aryl substituiertes Material in 6 Position) werden zwischen 2 transparenten Gläsern bzw. zwischen zwei flexiblen Filmen geschmolzen und nach dem Schmelzen, z.B. durch Abkühlen in flüssigem Stickstoff, abgeschreckt. Das sich bildende Glas ist voll transparent und hat variable Dicke. Das Glas ist stabil für lange Zeiten und für sehr unterscheidliche Temperaturen.

### Polymer "Pellets" mit 2-(2,4-dinitrobenzyl) pyridin dotiert:

2 mg von 2-(2,4-dinitrobenzyl) pyridin, α-DNBP, werden zu einem sehr feinen Pulver gemahlen. Um die Gradation des Mahlens festzustellen, können folgende Versuche unternommen werden:
1. Bestrahlen der Kristalle (350 nm <λ<400 nm)
2. Mahlen der Kristalle
3. Bestrahlen der Kristalle (350 nm<λ<400 nm)
4. Mahlen der Kristalle
5. Wenn die Farbe des Puders gleich bleibt, wird der Mahlvorgang unterbrochen.

Die Größe der Kristalle beträgt dann gerade einige µm. Der vermahlene Staub wird gemischt mit 100 mg einer geeigneten Matrix, wie z.B. PS, PBD etc. und in eine Presse gelegt. Die Kammer mit dem Material wird dann evakuiert und einem Druck von 15-20 kbar ausgesetzt (für etwa 30 Minuten). Das Resultat ist eine 1-2 mm dicke Tablette, die weiß aussieht. Die dünne Tablette wird tiefblau bei Einstrahlung von entsprechendem Licht (vorzugsweise UV). Die Tablette wird dann als Folge von Zeit und Temperatur wieder ausbleichen. Das System ist reversibel und kann, falls gewünscht, viele Male zyklisiert werden.

Alle oben genannten Proben werden lichtunempfindlich, wenn sie mit einer billigen, gelben Polymer- oder Zellophanfolie überzogen werden. Auf diese Weise kann ein Indikator hergestellt werden, der auch bei Tageslicht eingesetzt werden kann.

## Patentansprüche

1. Substrat zum Verpacken von oder zum Anbringen an alterungs- und temperaturempfindlichen Produkten mit einem im Bereich des Substrates angeordneten Zeit-Temperatur-Integrator,
**dadurch gekennzeichnet,**
**dass** der Zeit-Temperatur-Integrator eine Matrix und mindestens einen darin eingebetteten reversiblen kristallinen Indikator, der photochrome Eigenschaften auf der Basis von Transferreaktionen aufweist, enthält, wobei im Anschluss an die photo-induzierte Färbung des reversiblen kristallinen Indikator, eine zeit- und temperaturabhängige Entfärbung eintritt.

2. Substrat nach Anspruch 1, **dadurch gekennzeichnet, dass** das Substrat ein Verpackungsmaterial ist.

3. Substrat nach Anspruch 1 oder 2, **dadurch gekennzeichnet, dass** die Transferreaktionen auf dem Transfer von geladenen oder ungeladenen Wasserstoffatomen oder Wasserstoffisotopen beruhen.

4. Substrat nach einem der vorhergehenden Ansprüche, **dadurch gekennzeichnet, dass** der reversible Indikator aus der Gruppe ausgewählt ist, die besteht aus:

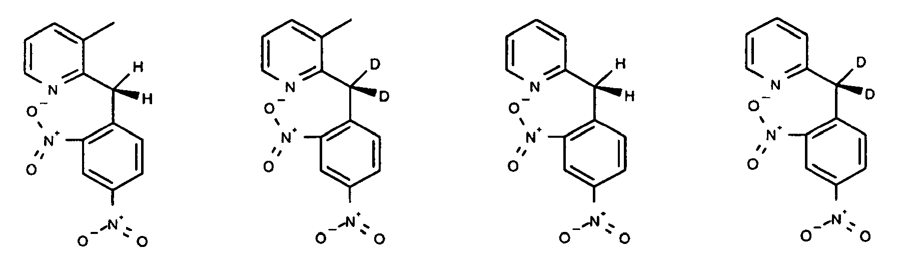

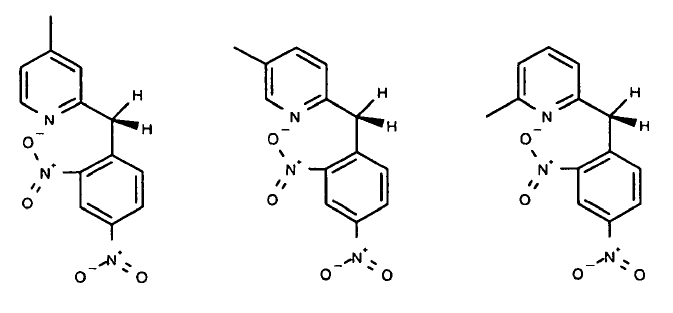

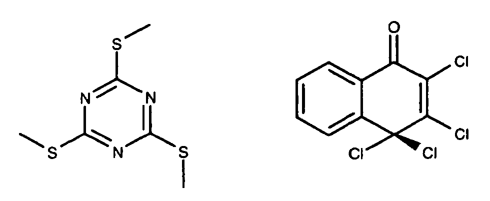

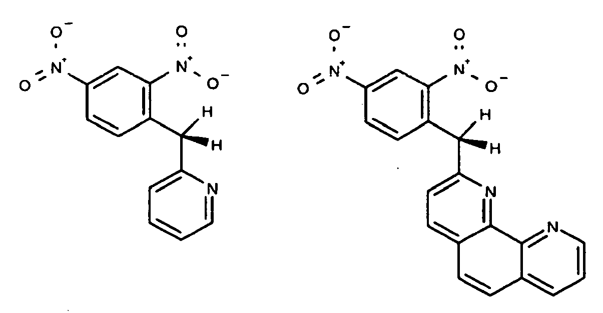

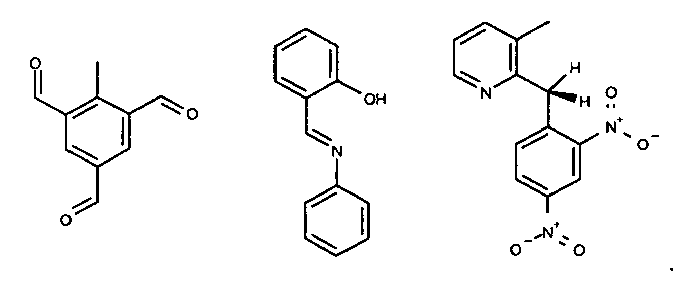

5. Substrat nach einem der vorhergehenden Ansprüche, **dadurch gekennzeichnet, dass** der reversible Indikator mehr als eine charakteristische Zeitdomäne aufweist.

6. Substrat nach einem der vorhergehenden Ansprüche, **dadurch gekennzeichnet, dass** mindestens zwei reversible Indikatoren mit unterschiedlichen charakteristischen Zeitdomänen in die Matrix eingebettet sind.

7. Substrat nach einem der vorhergehenden Ansprüche, **dadurch gekennzeichnet, dass** im Bereich des reversiblen Indidikators mindestens ein irreversibler Indikator mit photochromen Eigenschaften angeordnet ist.

8. Substrat nach einem der vorhergehenden Ansprüche, **dadurch gekennzeichnet, dass** der Zeit-Temperatur-Integrator ein Filter aufweist, welches für Licht, das eine photo-induzierte Färbung des reversiblen Indikators bewirkt, undurchlässig ist.

9. Substrat nach Anspruch 8, **dadurch gekennzeichnet, dass** das Filter im Wellenlängenbereich von einer Wellenlänge vorzugsweise unter 430 nm undurchlässig ist.

10. Substrat nach einem der vorhergehenden Ansprüche, **dadurch gekennzeichnet, dass** das Substrat eine im Bereich des Zeit-Temperatur-Integrators angeordnete Referenzskala umfasst.

11. Substrat nach einem der vorhergehenden Ansprüche, **dadurch gekennzeichnet, dass** die Matrix ein polymerer Film ist.

12. Substrat nach einem der vorhergehenden Ansprüche, **dadurch gekennzeichnet, dass** das Substrat ein polymerer Film ist.

13. Substrat nach einem der vorhergehenden Ansprüche, **dadurch gekennzeichnet, dass** ein Substratbereich die Matrix für den reversiblen Indikator bildet.

14. Verfahren zur Qualitätsbestimmung von alterungs- und temperaturempfindlichen Produkten, die mit einem Substrat nach einem der Ansprüche 1 bis 13 versehen sind, enthaltend die Schritte:
a) photo-induzierte Färbung des reversiblen kristallinen Indikators; und
b) Bestimmung des Grades der zeit- oder temperaturbedingten Entfärbung und der Qualität des Produktes unter Berücksichtigung des Grades der Entfärbung.

15. Verfahren nach Anspruch 14, **dadurch gekennzeichnet, dass** die Bestimmung der Qualität des Produktes durch Auswertung des Grades der Entfärbung mit Hilfe der Referenzskala erfolgt.

16. Verfahren nach Anspruch 14 oder 15, **dadurch gekennzeichnet, dass** nach der optisch induzierten Färbung des reversiblen Indikators der irreversible Indikator aufgebracht wird.

17. Verfahren nach einem der Ansprüche 14 bis 16, **dadurch gekennzeichnet, dass** nach der optisch induzierten Färbung das Filter aufgebracht wird.

18. Verfahren nach einem der.Ansprüche 14 bis 17, **dadurch gekennzeichnet, dass** die optisch induzierte Färbung des reversiblen Indikators durch UV- oder nahes UV-Licht erfolgt.

19. Verfahren nach einem der Ansprüche 14 bis 18, **dadurch gekennzeichnet, dass** die optische Aktivierung des Zeit-Temperatur-Integrators durch Bestrahlung der dem Filter gegenüberliegenden Seite des Zeit-Temperatur-Integrators erfolgt.

## Claims

1. Substrate for packaging, or attaching to, products which are sensitive to ageing and to temperature, having a time-temperature integrator arranged in the region of the substrate,
**characterised in that**
the time-temperature integrator comprises a matrix and, embedded therein, at least one reversible crystalline indicator which has photochromic properties based on transfer reactions, wherein photo-induced colouration of the reversible crystalline indicator is followed by the onset of a time- and temperature-dependent decolouration.

2. Substrate according to claim 1, **characterised in that** the substrate is a packaging material.

3. Substrate according to claim 1 or 2, **characterised in that** the transfer reactions are based on the transfer of charged or uncharged hydrogen atoms or hydrogen isotopes.

4. Substrate according to one of the preceding claims, **characterised in that** the reversible indicator is selected from the group consisting of:

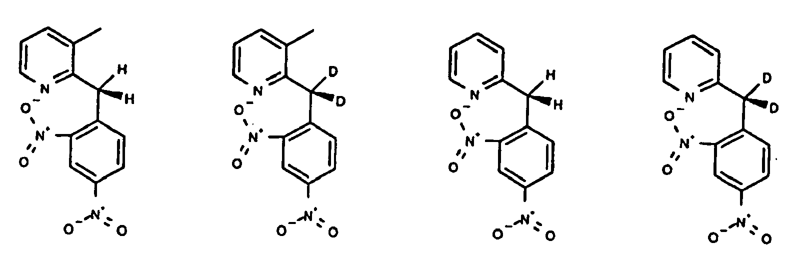

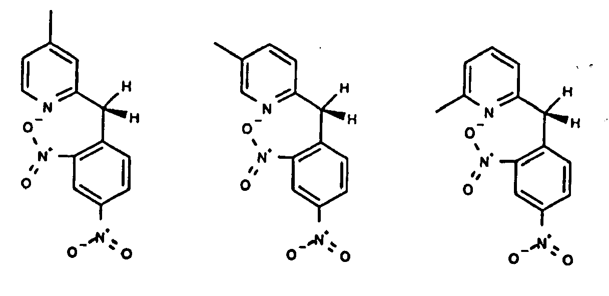

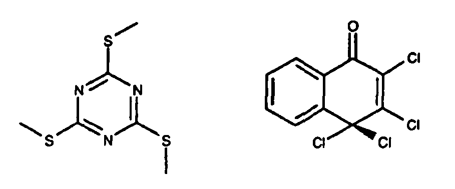

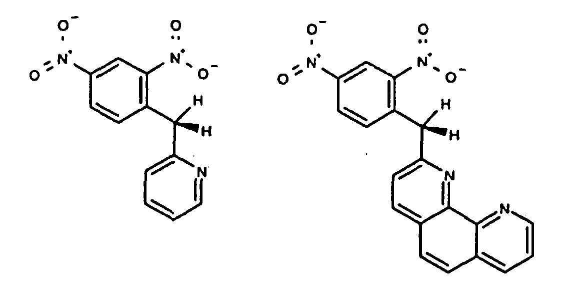

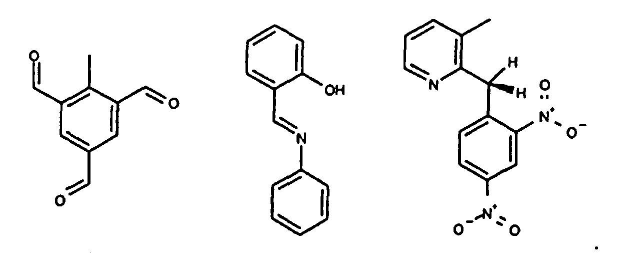

5. Substrate according to one of the preceding claims, **characterised in that** the reversible indicator has more than one characteristic time domain.

6. Substrate according to one of the preceding claims, **characterised in that** at least two reversible indicators having different characteristic time domains are embedded in the matrix.

7. Substrate according to one of the preceding claims, **characterised in that** at least one irreversible indicator having photochromic properties is arranged in the region of the reversible indicator.

8. Substrate according to one of the preceding claims, **characterised in that** the time-temperature integrator comprises a filter which is impermeable to light which brings about photo-induced colouration of the reversible indicator.

9. Substrate according to claim 8, **characterised in that** the filter is impermeable in the wavelength range of a wavelength preferably below 430 nm.

10. Substrate according to one of the preceding claims, **characterised in that** the substrate includes a reference scale arranged in the region of the time-temperature integrator.

11. Substrate according to one of the preceding claims, **characterised in that** the matrix is a polymeric film.

12. Substrate according to one of the preceding claims, **characterised in that** the substrate is a polymeric film.

13. Substrate according to one of the preceding claims, **characterised in that** a region of the substrate forms the matrix for the reversible indicator.

14. Method of determining the quality of products which are sensitive to ageing and to temperature and which are provided with a substrate according to one of claims 1 to 13, comprising the steps:
a) photo-induced colouration of the reversible crystalline indicator; and
b) determination of the degree of time- or temperature-related decolouration and of the quality of the product by taking into account the degree of decolouration.

15. Method according to claim 14, **characterised in that** the determination of the quality of the product is carried out by evaluating the degree of decolouration with the aid of the reference scale.

16. Method according to claim 14 or 15, **characterised in that** the irreversible indicator is applied after the optically induced colouration of the reversible indicator.

17. Method according to one of claims 14 to 16, **characterised in that** the filter is applied after the optically induced colouration.

18. Method according to one of claims 14 to 17, **characterised in that** the optically induced colouration of the reversible indicator is carried out by means of UV or near-UV light.

19. Method according to one of claims 14 to 18, **characterised in that** the optical activation of the time-temperature integrator is carried out by means of irradiation of that side of the time-temperature integrator which is remote from the filter.

## Revendications

1. Substrat pour l'emballage de ou l'apposition sur des produits sensibles au vieillissement ou à la température, comprenant un intégrateur temps-température placé dans une zone du substrat, **caractérisé en ce que** l'intégrateur temps-température contient une matrice et au moins un indicateur cristallin réversible incorporé dans celle-ci, qui présente des propriétés photochromiques reposant sur des réactions de transfert, dans lequel une décoloration dépendant du temps et de la température survient à la suite de la coloration photoinduite de l'indicateur cristallin réversible.

2. Substrat selon la revendication 1, **caractérisé en ce que** le substrat est un matériau d'emballage.

3. Substrat selon la revendication 1 ou 2, **caractérisé en ce que** les réactions de transfert reposent sur le transfert d'atomes d'hydrogène chargés ou non chargés ou d'isotopes de l'hydrogène.

4. Substrat selon l'une quelconque des revendications précédentes, **caractérisé en ce que** l'indicateur réversible est choisi dans le groupe constitué par :

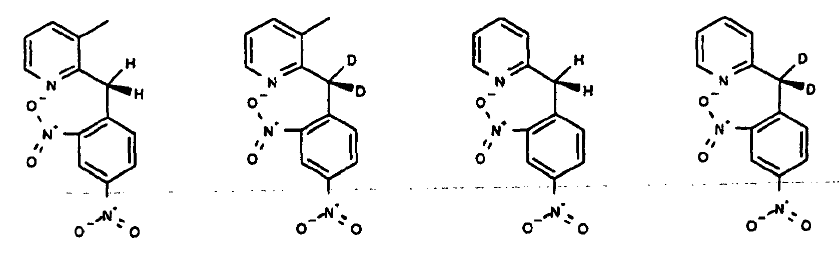

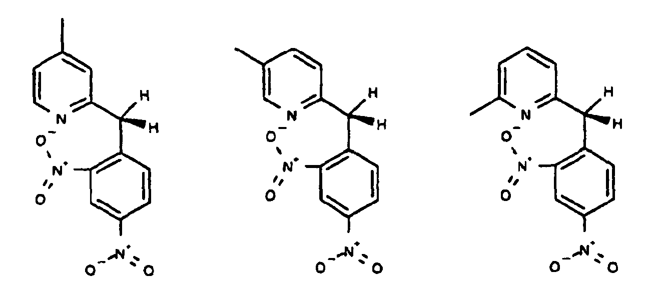

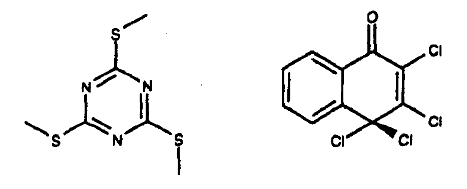

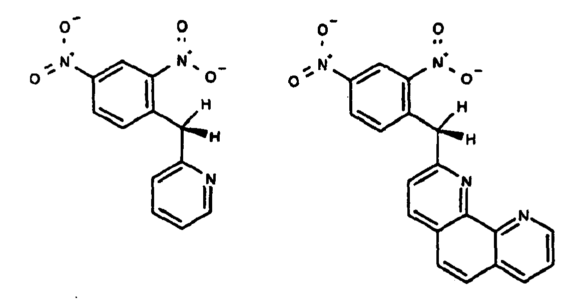

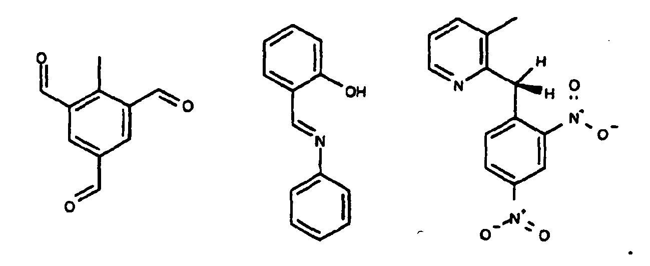

5. Substrat selon l'une quelconque des revendications précédentes, **caractérisé en ce que** l'indicateur réversible présente plus d'un domaine temporel caractéristique.

6. Substrat selon l'une quelconque des revendications précédentes, **caractérisé en ce qu'**au moins deux indicateurs réversibles ayant des domaines temporels caractéristiques différents sont incorporés dans la matrice.

7. Substrat selon l'une quelconque des revendications précédentes, **caractérisé en ce qu'**au moins un indicateur irréversible présentant des propriétés photochromiques est placé dans la zone de l'indicateur réversible.

8. Substrat selon l'une quelconque des revendications précédentes, **caractérisé en ce que** l'intégrateur temps-température présente un filtre qui est opaque à la lumière qui provoque une coloration photoinduite de l'indicateur réversible.

9. Substrat selon la revendication 8, **caractérisé en ce que** le filtre est opaque dans le domaine de longueur d'onde d'une longueur d'onde de préférence inférieure à 430 nm.

10. Substrat selon l'une quelconque des revendications précédentes, **caractérisé en ce que** le substrat comprend une échelle de référence placée dans la zone de l'intégrateur temps-température.

11. Substrat selon l'une quelconque des revendications précédentes, **caractérisé en ce que** la matrice est un film polymère.

12. Substrat selon l'une quelconque des revendications précédentes, **caractérisé en ce que** le substrat est un film polymère.

13. Substrat selon l'une quelconque des revendications précédentes, **caractérisé en ce qu'**une zone du substrat forme la matrice pour l'indicateur réversible.

14. Procédé permettant de déterminer la qualité de produits sensibles au vieillissement et à la température, qui sont pourvus d'un substrat selon l'une quelconque des revendications 1 à 13, comprenant les étapes suivantes :
a) coloration photoinduite de l'indicateur cristallin réversible ; et
b) détermination du degré de décoloration dépendant du temps ou de la température et de la qualité du produit en tenant compte du degré de décoloration.

15. Procédé selon la revendication 14, **caractérisé en ce que** la détermination de la qualité du produit est effectuée en évaluant le degré de décoloration à l'aide de l'échelle de référence.

16. Procédé selon la revendication 14 ou 15, **caractérisé en ce que** l'indicateur irréversible est mis en place après la coloration induite par voie optique de l'indicateur réversible.

17. Procédé selon l'une quelconque des revendications 14 à 16, **caractérisé en ce que** le filtre est mis en place après la coloration induite par voie optique.

18. Procédé selon l'une quelconque des revendications 14 à 17, **caractérisé en ce que** la coloration induite par voie optique de l'indicateur réversible a lieu sous la lumière UV ou proche UV.

19. Procédé selon l'une quelconque des revendications 14 à 18, **caractérisé en ce que** l'activation optique de l'intégrateur temps-température est réalisée par irradiation du côté de l'intégrateur temps-température opposé au filtre.
